# EUROPÄISCHE PATENTSCHRIFT

(11) **EP 3 212 691 B1**
(45) Veröffentlichungstag und Bekanntmachung des Hinweises auf die Patenterteilung: **12.12.2018**
(21) Anmeldenummer: 15787222.7
(22) Anmeldetag: 30.10.2015
(51) Int. Cl.: C08G 63/181

(54) **VERFAHREN ZUR HERSTELLUNG VON POLYESTERPOLYOLEN**
METHOD FOR THE MANUFACTURE OF POLYESTER POLYOLS
PROCÉDÉ DESTINÉ À LA FABRICATION DE POLYOLS DE POLYESTER

(30) Priorität: 30.10.2014 EP 14191153
(43) Veröffentlichungstag der Anmeldung: 06.09.2017
(73) Patentinhaber: BASF SE, 67056 Ludwigshafen am Rhein (DE)
(72) Erfinder: COHEN, Kathrin, 68163 Mannheim (DE); MENON, Sindhu, Pudong 200135 (CN)
(74) Vertreter: BASF IP Association
(86) Internationale Anmeldenummer: PCT/EP2015/075235
(87) Internationale Veröffentlichungsnummer: WO 2016/066791

(56) Entgegenhaltungen:
- WO-A1-2011/023491
- WO-A1-2012/005645
- WO-A1-2013/109834
- WO-A1-2014/064130

## Beschreibung

Die vorliegende Erfindung betrifft ein Verfahren zur Herstellung von Polyesterpolyolen sowie die nach dem Verfahren erhältlichen Polyesterpolyole.

Polyesterpolyole (auch Polyesteralkohole oder PESOLe genannt) werden in verschiedenen Bereichen der Technik, insbesondere aber zur Herstellung von Polyurethan- (PU-)Schaumstoffen eingesetzt.

Für den Einsatz der PESOLe zur Herstellung von PU-Schaumstoffen, bspw. PU-Hartschaumstoffen, ist es wünschenswert, dass die PESOLe eine relativ niedrige Säurezahl aufweisen. Eine Säurezahl kleiner oder gleich 2 mg KOH/g bzw. bevorzugt 1 mg KOH/g wird im Regelfall angestrebt.

Eine zu hohe Säurezahl des PESOLs kann nämlich zu Hydrolyse des PU-Schaums führen.

Weiterhin werden derzeit Alternativen für erdölbasierte Rohstoffe untersucht, auch als Basis für Kunststoffe wie bspw. Polyurethane. Aufgrund der Begrenztheit der fossilen Ressourcen sind daher verstärkt biobasierte (erneuerbare) Rohstoffe in den Fokus gerückt.

Die Verwendung biobasierter Rohstoffe für die Synthese von Polymeren ist ein aufkommender Trend in der chemischen Industrie. Diese bioerneuerbaren Rohstoffe können typischer Weise aus Kohlenhydraten oder natürlichen Ölen hergestellt werden. Durch Umsetzung von Glycose zu 5-Hydroxymethylfufural (HMF) wird eine Plattformchemikalie erhalten, die zu vielen Derivaten weiter umgesetzt werden kann, z.B. zu Furandicarbonsäure und Tetrahydrobishydroxymethylfuran (THFdiol).

Somit ist Furandicarbonsäure eine Verbindung, die aus biobasierten (erneuerbaren) Quellen bezogen werden kann.

Es wäre wünschenswert, Furandicarbonsäure als biobasierter Rohstoff auch zur Herstellung von PESOLen einsetzen zu können, die nachher weiter zu PU-Schaumstoffen, insbesondere PU-Hartschaumstoffen, weiterverarbeitet werden können.

Die Umsetzung von Furandicarbonsäure zu Polyester-Polyolalkoholen (PESOLen) ist bereits literaturbekannt und in einigen Patenten beschrieben, z.B. in WO2012/005648, WO2012/005647, WO2012/005645, WO2013/109834. Die Furandicarbonsäure (FDCA)-basierten Produkte wurden in diesen Patenten meist in einstufigen Verfahren bzw. unter Verwendung von Schleppmitteln wie Xylol hergestellt. Hierbei konnten allerdings nur Produkte mit Säurezahlen größer 1,5 mg KOH/g erhalten werden. Die Herstellung von Alkydharzen aus Furansäure oder einem Furansäureester oder -halogenids, Polyolen und weiteren Säure- und Alkoholkomponenten in zwei oder drei Schritten ist in WO2012/005645 beschrieben. Bei diesem Herstellungsprozess wird ebenfalls ein Schleppmittel wie Xylol zur Entfernung des Kondensationswassers zugegeben.

Die bisher bekannten, oben genannten einstufigen bzw. lösemittelbasierten Verfahren Verfahren zur Herstellung von Polyesterpolyolen unter Verwendung von Furandicarbonsäure liefern also Produkte mit relativ hohen Säurezahlen (i. d. R. größer als 1,5 mg KOH/g), was den Einsatz der erhaltenen Polyesterpolyole zur Herstellung von PU-Schaumstoffen behindert.

Es bestand somit die Aufgabe, ein Verfahren zur Herstellung von Polyesterpolyolen unter Verwendung von Furandicarbonsäure bereitzustellen, welches Produkte mit einer möglichst niedrigen Säurezahl - bevorzugt niedriger als 1 mg KOH/g oder bevorzugter niedriger als 0,8 mg KOH/ g - liefert. Zudem sollte möglichst aus Gründen der Verfahrensökonomie auf zusätzliche organische Lösungsmittel, insbesondere auf hochsiedende organische Lösungsmittel wie Xylol, verzichtet werden.

Diese Aufgabe konnte nun überraschenderweise durch ein zweistufiges, lösemittelfreies Syntheseverfahren gelöst werden, indem zunächst mindestens eine Dicarbonsäure oder deren Anhydrid mit mindestens einem Diol bei einer relativ hohen Temperatur zur Reaktion gebracht und das Reaktionswasser zum großen Teil entfernt wird, und erst dann bei einer niedrigeren Temperatur die Furandicarbonsäure zugegeben und nach erneuter Erhöhung der Temperatur mit dem Reaktionsgemisch umgesetzt wird.

Ein Gegenstand der vorliegenden Erfindung ist also ein Verfahren zur Herstellung von Polyesterpolyolen durch Umsetzung von mindestens einer Dicarbonsäure DC oder mindestens einem Dicarbonsäureanhydrid DCA sowie Furandicarbonsäure mit mindestens einem mindestens difunktionellen Alkohol A, wobei
- in einem ersten Schritt (1) die Dicarbonsäuren DC oder Dicarbonsäureanhydride DCA mit den mindestens difunktionellen Alkoholen A unter Entfernung des Kondensationswassers bei einer Temperatur im Bereich von 100 bis 300 °C umgesetzt werden, bis mindestens 80 Gew.% des Kondensationswassers entfernt wurden, bezogen auf die gesamte Menge des durch Kondensation der Reaktanden erzeugbaren Wassers, wobei die Menge des Kondensationswassers anhand des destillativ aus dem Reaktionsgefäß entfernten Wassers bestimmt wird, und wobei die Dicarbonsäure DC nicht Furandicarbonsäure ist, und
- in einem zweiten Schritt (2a), nachdem das Reaktionsgemisch eine Temperatur im Bereich von 50 bis 150 °C erreicht hat, Furandicarbonsäure zugegeben wird und anschließend
- in einem nächsten Schritt (2b) das Reaktionsgemisch bei einer Temperatur im Bereich von 150 bis 300 °C weiter zur Reaktion gebracht wird, bis eine Säurezahl von kleiner oder gleich 1 mg KOH/g, bevorzugt kleiner oder gleich 0,8 mg KOH/g, erreicht ist,
wobei in keinem Verfahrensschritt ein zusätzliches organisches Lösungsmittel verwendet wird.

Die Angabe der Entfernung von mindestens 80 Gew.% des Kondensationswassers bezieht sich dabei auf die gesamte Menge des durch Kondensation der Reaktanden erzeugbaren Wassers. Die Menge des Kondensationswassers wird anhand des destillativ aus dem Reaktionsgefäß entfernten Wassers bestimmt.

Die Angabe, dass erfindungsgemäß in keinem Verfahrensschritt ein zusätzliches organisches Lösemittel verwendet wird, bedeutet, dass außer den Reaktanden - die eventuell als Lösemittel angesehen werden können - kein Lösemittel verwendet wird.

Weitere Gegenstände der vorliegenden Erfindung sind auch ein Polyesterpolyol, herstellbar nach dem erfindungsgemäßen Verfahren, sowie die Verwendung des erfindungsgemäßen bzw. nach dem erfindungsgemäßen Verfahren herstellbaren Polyesterpolyols zur Herstellung von Polyurethanschaumstoffen, bevorzugt Polyurethanhartschaumstoffen, durch Umsetzung mit mindestens einem mindestens difunktionellen Isocyanat und optional mit mindestens einem Treibmittel.

Im Kontext der vorliegenden Erfindung bedeutet der Begriff "difunktioneller Alkohol" eine Verbindung mit zwei freien (d. h. reaktiven) Alkoholfunktionalitäten.

In einer Ausführungsform des erfindungsgemäßen Verfahrens wird die Reaktion in Schritt (2b) bis zu einer Säurezahl von kleiner oder gleich 0,7 mg KOH/g, bevorzugt kleiner oder gleich 0,3 mg KOH/g geführt.

Zur Bestimmung der Säurezahl werden beim erfindungsgemäßen Verfahren in der Regel alle zwei bis drei Stunden Proben des Reaktionsgemischs genommen.

In einer weiteren Ausführungsform des erfindungsgemäßen Verfahrens liegt die Temperatur im ersten Schritt (1) im Bereich von 150 bis 250 °C, bevorzugt im Bereich von 160 bis 220 °C, besonders bevorzugt im Bereich von 170 bis 190 °C.

In einer Ausführungsform des erfindungsgemäßen Verfahrens liegt die Temperatur im Schritt (2a) im Bereich von 80 bis 120 °C, bevorzugt im Bereich von 90 bis 110 °C.

In einer weiteren Ausführungsform des erfindungsgemäßen Verfahrens liegt die Temperatur im Schritt (2b) im Bereich von 160 bis 280 °C, bevorzugt im Bereich von 170 bis 240 °C, besonders bevorzugt im Bereich von 190 bis 210 °C.

In einer Ausführungsform des erfindungsgemäßen Verfahrens sind wenigstens eine, bevorzugt alle Dicarbonsäuren DC ausgewählt aus der Gruppe bestehend aus aliphatischen und aromatischen Dicarbonsäuren.

In einer weiteren Ausführungsform des erfindungsgemäßen Verfahrens wird nur eine Dicarbonsäuren DC verwendet. Bevorzugt ist diese Dicarbonsäure DC Adipinsäure.

Alle Dicarbonsäureanhydride DCA sind ausgewählt aus der Gruppe bestehend aus Phthalsäureanhydrid.

In einer bevorzugten Ausführungsform des erfindungsgemäßen Verfahrens werden keine Fettsäuren eingesetzt.

In einer weiteren bevorzugten Ausführungsform des erfindungsgemäßen Verfahrens werden keine Monocarbonsäuren eingesetzt.

Die Dicarbonsäure ist nicht Furandicarbonsäure.

In einer Ausführungsform des erfindungsgemäßen Verfahrens sind wenigstens ein, bevorzugt alle difunktionellen Alkohole A ausgewählt aus der Gruppe bestehend aus aliphatischen und aromatischen difunktionellen Alkoholen.

In einer weiteren Ausführungsform des erfindungsgemäßen Verfahrens sind wenigstens ein, bevorzugt alle difunktionellen Alkohole A ausgewählt aus der Gruppe bestehend aus aliphatischen difunktionellen Alkoholen.

In einer bevorzugten Ausführungsform des erfindungsgemäßen Verfahrens sind wenigstens ein, bevorzugt alle difunktionellen Alkohole A ausgewählt aus der Gruppe bestehend aus Diethylenglykol (DEG), Methylethylglykol (MEG), 2-Methyl-1,3-propandiol, 1,4-Cyclohexandimethanol, Neopentylglykol, Trimethylolpropan, Polyetherpolyole.

In einer weiteren bevorzugten Ausführungsform des erfindungsgemäßen Verfahrens sind wenigstens ein, bevorzugt alle difunktionellen Alkohole A ausgewählt aus der Gruppe bestehend aus DEG, MEG, Polyetherpolyole.

In einer Ausführungsform des erfindungsgemäßen Verfahrens sind wenigstens ein, bevorzugt alle difunktionellen Alkohole A ausgewählt aus der Gruppe bestehend aus DEG.

In einer Ausführungsform des erfindungsgemäßen Verfahrens beträgt der Anteil der Furandicarbonsäure 5 bis 45 Gew.%, bevorzugt 20 bis 40 Gew.%, bezogen auf den Gesamtansatz.

Die OH-Zahl des erhaltenen PESOL-Produkts liegt in der Regel zwischen 50 und 300 mg KOH/g. Bevorzugte Produkte weisen OH-Zahlen zwischen 150 und 300 mg KOH/g, besonders bevorzugt 160 bis 300 mg KOH/g auf.

Das aus dem erfindungsgemäßen Verfahren erhaltene Produkt ist in der Regel bei 25 °C flüssig. Mit "flüssig" ist insbesondere eine Viskosität bei 25 °C von 1 bis 40000 mPas gemeint. In der Regel weist das erfindungsgemäße Produkt bei 75 °C eine Viskosität von kleiner oder gleich 40000 mPas, bevorzugt kleiner oder gleich 15000 mPas auf.

Wie oben bereits erwähnt, ist nämlich auch ein nach dem erfindungsgemäßen Verfahren herstellbarer Polyesterpolyol ein Gegenstand der vorliegenden Erfindung.

Dieser Polyesterpolyol weist eine Säurezahl von kleiner oder gleich 1 mg KOH/g, bevorzugt kleiner oder gleich 0,8 mg KOH/g auf. Bevorzugt weist der Polyesterpolyol auch eine OH-Zahl zwischen 50 und 300 mg KOH/g, besonders bevorzugt zwischen 150 und 300 mg KOH/g und ganz besonders bevorzugt 160 bis 300 mg KOH/g auf.

Der erfindungsgemäße Polyesterpolyol ist bevorzugt bei 25 °C flüssig ist und/ oder weist bei 75 °C eine Viskosität von kleiner oder gleich 40000 mPas, besonders bevorzugt kleiner oder gleich 15000 mPas auf.

Es handelt sich bei dem erfindungsgemäßen Polyesterpolyol um ein PESOL, das von Furandicarbonsäure stammende Bausteine enthält. Bevorzugt liegt der Anteil der von Furandicarbonsäure abgeleiteten Einheiten bei 5 bis 45 Gew.%, bevorzugt 20 bis 40 Gew.%, bezogen auf das Gesamtgewicht des PESOLs.

Die vorliegende Erfindung betrifft also in einer bevorzugten Ausführungsform auch ein Polyesterpolyol enthaltend von 5 bis 45 Gew.%, bevorzugt 20 bis 40 Gew.%, von Furandicarbonsäure abgeleitete Einheiten, bezogen auf das Gesamtgewicht des PESOLs, mit einer Säurezahl von kleiner oder gleich 1 mg KOH/g, bevorzugt kleiner oder gleich 0,8 mg KOH/g, und einer OH-Zahl zwischen 50 und 300 mg KOH/g, besonders bevorzugt zwischen 150 und 300 mg KOH/g und ganz besonders bevorzugt 160 bis 300 mg KOH/g, wobei das Polyesterpolyol bevorzugt bei 25 °C flüssig ist.

Die vorliegende Erfindung soll nun anhand der folgenden Beispiele veranschaulicht werden. Hierbei dienen die Beispiele rein illustrativen Zwecken und sollen keinesfalls den Umfang der Erfindung und der Patentansprüche einschränken.

### Methoden:

### Viskositätsbestimmung:

Die Viskosität der Polyole wurde - wenn nicht anders angegeben bei 25 °C - gemäß DIN EN ISO 3219 (Ausgabe 01.10.1994) mit einem Rotationsviskosimeter Rheotec RC 20 unter Verwendung der Spindel CC 25 DIN (Spindel-Durchmesser: 12,5 mm; Messzylinder-Innendurchmesser: 13,56 mm) bei einer Scherrate von 50 1/s bestimmt.

### Messung der Hydroxylzahl:

Die Hydroxylzahlen wurden nach der Phthalsäureanhydrid-Methode DIN 53240 (Ausgabe: 01.12.1971) bestimmt und in mg KOH/g angegeben

### Messung der Säurezahl:

Die Säurezahl wurde nach DIN EN 1241 (Ausgabe: 01.05.1998) bestimmt und ist in mg KOH/g angegeben.

### Beispiele

### Beispiel 1)

Einem 2000 ml Rundhalskolben versehen mit Thermometer, Stickstoffeinleitung, Rührer und Heizpilz werden zunächst 619,7 g Adipinsäure und 563,6 g 2-Methyl-1,3-propandiol zugefügt. Aus dem Gemisch wird das entstehende Reaktionswasser kontinuierlich destillativ entfernt. Nachdem 105 g des Destillates aufgefangen wurden, wird das Gemisch auf 100 °C abgekühlt und 220,5 g Furandicarbonsäure zugefügt. Das Gemisch wird anschließend weiter bei 200 °C kondensiert, bis ein Produkt mit einer Säurezahl <1.0 mg KOH/g erhalten wird (es wurden alle zwei bis drei Stunden Proben des Reaktionsgemischs zur Bestimmung der Säurezahl entnommen). Die gesamte Reaktionszeit betrug 19 h.

Das erhaltene Polymer weist folgende Eigenschaften auf:
Säurezahl: 0.163 mg KOH/g
Hydroxylzahl: 60.23 mg KOH/g
Viskosität bei 75 °C: 2352 mPas

### Beispiel 2)

Einem 3000 ml Rundhalskolben versehen mit Thermometer, Stickstoffeinleitung, Rührer und Heizpilz werden 573.6 g Phthalsäureanhydrid und 1531.3 g Diethylene glycol vorgelegt, auf 180 °C erwärmt und das entstehende Destillat kontinuierlich destillativ entfernt (30 g Destillat). Anschließend wird das Gemisch auf 100 °C abgekühlt und 604.5 g Furandicarbonsäure hinzugefügt. Das Gemisch wird anschließend weiter bei 200 °C kondensiert, bis ein Produkt mit einer Säurezahl <1.0 mg KOH/g entsteht (es wurden alle zwei bis drei Stunden Proben des Reaktionsgemischs zur Bestimmung der Säurezahl entnommen). Die gesamte Reaktionszeit betrug 12 h.

Das erhaltene Polymer weist folgende Eigenschaften auf:
Säurezahl: 0.69 mg KOH/g
Hydroxylzahl: 293.3 mg KOH/g
Viskosität bei 25 °C: 10100 mPas

### Beispiel 3)

Einem 500 ml Rundhalskolben versehen mit Thermometer, Stickstoffeinleitung, Rührer und Heizpilz werden 189.6 g Adipinsäure und 297.5 g 1,4-Cyclohexandimethanol (Isomerengemisch) zugefügt und auf 180 °C erhitzt. Hierbei werden 42.4 g (90,6 Gew.%) wässriges Destillat destillativ entfernt. Anschließend wird das Gemisch auf 100 °C abgekühlt und 67.5 Furandicarbonsäure hinzugefügt. Das Gemisch wird weiter bei 200 °C kondensiert, bis ein Produkt mit einer Säurezahl <1.0 mg KOH/G entsteht (es wurden alle zwei bis drei Stunden Proben des Reaktionsgemischs zur Bestimmung der Säurezahl entnommen). Die gesamte Reaktionszeit betrug 9 h.

Das erhaltene Polymer weist folgende Eigenschaften auf:
Säurezahl: <0.1 mg KOH/g
Hydroxylzahl: 68.5 mg KOH/g
Viskosität bei 75 °C: 37100 mPas

### Beispiel 4)

Analog zu den vorherigen Beispielen werden 159,87 g Adipinsäure, 57,11 g Trimethylolpropan und 341,08 g Neopentylglykol vorgelegt und bei 180 °C unter kontinuierlicher Entfernung des Wassers kondensiert. 38,8 g (96 Gew.%) des Destillats wurden entfernt und das Gemisch anschließend auf 100 °C abgekühlt. Nach Erreichen dieser Temperatur werden 170,8 g 2,5-Furandicarbonsäure hinzugegeben und das Gemisch wiederum auf 200 °C erhitzt. Die Reaktion wurde fortgeführt bis das Produkt eine Säurezahl <1 mg KOH/g erreichte (es wurden alle zwei bis drei Stunden Proben des Reaktionsgemischs zur Bestimmung der Säurezahl entnommen). Die OHZ wurde durch Zugabe von 6,8 g Neopentylglykol eingestellt, die bei 180 °C für 3 h einreagiert wurden eingestellt. Das Produkt wurde innerhalb von 13 h Reaktionszeit erhalten.

Das Polyester Polyol hatte folgende Kennwerte
Säurezahl: <0.2 mg KOH/g
OHZ: 118 mg KOH/g
Viskosität bei 75 °C: 13030 mPas

| | |
|---|---|
| Säurezahl | <0,2 mg KOH/g |
| OH-Zahl | 118 mg KOH/g |
| Karl-Fischer | 0,009 % |
| Kegel-Platte Viskosimeter, 75 °C | 13030 mPa*s |

### Vergleichsbeispiel 1

In einem 500 ml Rundhalskolben versehen mit Thermometer, Stickstoffeinleitung, Rührer und Heizpilz werden 163,6 g Adipinsäure, 174,7 g 2,5-Furandicarbonsäure und 58,4 g Trimellitsäure vorgelegt und auf 120 °C erhitzt. Bei Erreichen der Temperatur wird 40 ppm Titantetrabutylat als Katalysator hinzugegeben. Anschließend wurde das homogene Gemisch weiter auf 180 °C erwärmt und das entstehende Kondensationswasser kontinuierlich entfernt. Nachdem die destillierte Menge an Wasser weniger wurde, wurde die Reaktionstemperatur auf 200 °C erhöht und Vakuum angelegt. Das Vakuum wurde gebrochen und dem Gemisch wurden weitere 40,7 g Neopentylglykol zudosiert um die OHZ einzustellen. Auch nach 24 h Reaktionszeit konnte eine Säurezahl <1 mg KOH/g nicht erreicht werden (es wurden alle zwei bis drei Stunden Proben des Reaktionsgemischs zur Bestimmung der Säurezahl entnommen).

Das erhaltene Produkt hatte folgende Kennwerte:
Säurezahl: 6.8 mg KOH/g
OH-Zahl 114,6 mg KOH/g
Kegel-Platte Viskosimeter, 75 °C: 36720 mPa*s

Anhand der experimentellen Daten wird deutlich, dass das zweistufige, lösemittelfreie Verfahren zur Herstellung eines PESOLs im Vergleich zum einstufigen Verfahren eine deutlich niedrigere Säurezahl des Produkts ergibt.

## Patentansprüche

1. Verfahren zur Herstellung von Polyesterpolyolen durch Umsetzung von mindestens einer Dicarbonsäure DC oder mindestens einem Dicarbonsäureanhydrid DCA sowie Furandicarbonsäure mit mindestens einem mindestens difunktionellen Alkohol A, wobei
• in einem ersten Schritt (1) die Dicarbonsäuren DC oder Dicarbonsäureanhydride DCA mit den mindestens difunktionellen Alkoholen A unter Entfernung des Kondensationswassers bei einer Temperatur im Bereich von 100 bis 300 °C umgesetzt werden, bis mindestens 80 Gew.% des Kondensationswassers entfernt wurden, bezogen auf die gesamte Menge des durch Kondensation der Reaktanden erzeugbaren Wassers, wobei die Menge des Kondensationswassers anhand des destillativ aus dem Reaktionsgefäß entfernten Wassers bestimmt wird, und wobei die Dicarbonsäure DC nicht Furandicarbonsäure ist, und wobei alle Dicarbonsäureanhydride DCA ausgewählt sind aus der Gruppe bestehend aus Phthalsäureanhydrid, und
• in einem zweiten Schritt (2a), nachdem das Reaktionsgemisch eine Temperatur im Bereich von 50 bis 150 °C erreicht hat, Furandicarbonsäure zugegeben wird und anschließend
• in einem nächsten Schritt (2b) das Reaktionsgemisch bei einer Temperatur im Bereich von 150 bis 300 °C weiter zur Reaktion gebracht wird, bis eine Säurezahl von kleiner oder gleich 1 mg KOH/g, bevorzugt kleiner oder gleich 0,8 mg KOH/g, erreicht ist,
wobei in keinem Verfahrensschritt ein zusätzliches organisches Lösungsmittel verwendet wird.

2. Verfahren zur Herstellung von Polyesterpolyolen gemäß Anspruch 1, wobei die Reaktion in Schritt (2b) bis zu einer Säurezahl von kleiner oder gleich 0,7 mg KOH/g, bevorzugt kleiner oder gleich 0,3 mg KOH/g geführt wird.

3. Verfahren zur Herstellung von Polyesterpolyolen gemäß Anspruch 1 oder 2, wobei die Temperatur im ersten Schritt (1) im Bereich von 150 bis 250 °C liegt, bevorzugt im Bereich von 160 bis 220 °C, besonders bevorzugt im Bereich von 170 bis 190 °C.

4. Verfahren zur Herstellung von Polyesterpolyolen gemäß einem der Ansprüche 1 bis 3, wobei die Temperatur im Schritt (2a) im Bereich von 80 bis 120 °C liegt, bevorzugt im Bereich von 90 bis 110 °C.

5. Verfahren zur Herstellung von Polyesterpolyolen gemäß einem der Ansprüche 1 bis 4, wobei die Temperatur im Schritt (2b) im Bereich von 160 bis 280 °C liegt, bevorzugt im Bereich von 170 bis 240 °C, besonders bevorzugt im Bereich von 190 bis 210 °C.

6. Verfahren zur Herstellung von Polyesterpolyolen gemäß einem der Ansprüche 1 bis 5, wobei wenigstens eine, bevorzugt alle Dicarbonsäuren DC ausgewählt sind aus der Gruppe bestehend aus aliphatischen und aromatischen Dicarbonsäuren.

7. Verfahren zur Herstellung von Polyesterpolyolen gemäß einem der Ansprüche 1 bis 6, wobei wenigstens eine, bevorzugt alle Dicarbonsäuren DC ausgewählt sind aus der Gruppe bestehend aus Adipinsäure.

8. Verfahren zur Herstellung von Polyesterpolyolen gemäß einem der Ansprüche 1 bis 7, wobei keine Fettsäuren eingesetzt werden.

9. Verfahren zur Herstellung von Polyesterpolyolen gemäß einem der Ansprüche 1 bis 8, wobei keine Monocarbonsäuren eingesetzt werden.

10. Verfahren zur Herstellung von Polyesterpolyolen gemäß einem der Ansprüche 1 bis 9, wobei wenigstens ein, bevorzugt alle difunktionellen Alkohole A ausgewählt sind aus der Gruppe bestehend aus aliphatischen und aromatischen difunktionellen Alkoholen.

11. Verfahren zur Herstellung von Polyesterpolyolen gemäß einem der Ansprüche 1 bis 10, wobei wenigstens ein, bevorzugt alle difunktionellen Alkohole A ausgewählt sind aus der Gruppe bestehend aus aliphatischen difunktionellen Alkoholen.

12. Verfahren zur Herstellung von Polyesterpolyolen gemäß einem der Ansprüche 1 bis 11, wobei wenigstens ein, bevorzugt alle difunktionellen Alkohole A ausgewählt sind aus der Gruppe bestehend aus Diethylenglykol (DEG), Methylethylglykol (MEG), 2-Methyl-1,3-propandiol, 1,4-Cyclohexandimethanol, Neopentylglykol, Trimethylolpropan, Polyetherpolyole.

13. Verfahren zur Herstellung von Polyesterpolyolen gemäß einem der Ansprüche 1 bis 12, wobei wenigstens ein, bevorzugt alle difunktionellen Alkohole A ausgewählt sind aus der Gruppe bestehend aus DEG, MEG, Polyetherpolyole.

14. Verfahren zur Herstellung von Polyesterpolyolen gemäß einem der Ansprüche 1 bis 13, wobei wenigstens ein, bevorzugt alle difunktionellen Alkohole A ausgewählt sind aus der Gruppe bestehend aus DEG.

15. Verfahren zur Herstellung von Polyesterpolyolen gemäß einem der Ansprüche 1 bis 14, wobei die OH-Zahl des Produkts zwischen 50 und 300 mg KOH/g liegt, bevorzugt zwischen 150 und 300 mg KOH/g, besonders bevorzugt 160 bis 300 mg KOH/g.

16. Verfahren zur Herstellung von Polyesterpolyolen gemäß einem der Ansprüche 1 bis 15, wobei das Produkt bei 25 °C flüssig ist, was eine Viskosität bei 25 °C von 1 bis 40000 mPas bedeutet.

17. Verfahren zur Herstellung von Polyesterpolyolen gemäß einem der Ansprüche 1 bis 16, wobei das Produkt bei 75 °C eine Viskosität von kleiner oder gleich 40000 mPas aufweist, bevorzugt kleiner oder gleich 15000 mPas, wobei die Viskosität gemäß DIN EN ISO 3219 (Ausgabe 01.10.1994) mit einem Rotationsviskosimeter Rheotec RC 20 unter Verwendung der Spindel CC 25 DIN (Spindel-Durchmesser: 12,5 mm; Messzylinder-Innendurchmesser: 13,56 mm) bei einer Scherrate von 50 1/s bei 25 °C bestimmt wird.

18. Verfahren zur Herstellung von Polyesterpolyolen gemäß einem der Ansprüche 1 bis 17, wobei der Anteil der Furandicarbonsäure 5 bis 45 Gew.%, bevorzugt 20 bis 40 Gew.%, beträgt, bezogen auf den Gesamtansatz.

19. Polyesterpolyol, herstellbar nach dem Verfahren eines der Ansprüche 1 bis 18, mit einer Säurezahl von kleiner oder gleich 1 mg KOH/g, bevorzugt kleiner oder gleich 0,8 mg KOH/g, und einer OH-Zahl zwischen 50 und 300 mg KOH/g, bevorzugt zwischen 150 und 300 mg KOH/g, besonders bevorzugt 160 bis 300 mg KOH/g.

20. Polyesterpolyol gemäß Anspruch 19, wobei das Polyesterpolyol bei 25 °C flüssig ist und/oder das Polyesterpolyol bei 75 °C eine Viskosität von kleiner oder gleich 40000 mPas, bevorzugt kleiner oder gleich 15000 mPas aufweist, wobei die Viskosität gemäß DIN EN ISO 3219 (Ausgabe 01.10.1994) mit einem Rotationsviskosimeter Rheotec RC 20 unter Verwendung der Spindel CC 25 DIN (Spindel-Durchmesser: 12,5 mm; Messzylinder-Innendurchmesser: 13,56 mm) bei einer Scherrate von 50 1/s bei 25 °C bestimmt wird.

## Claims

1. A process for preparing polyester polyols by reacting at least one dicarboxylic acid DC or at least one dicarboxylic anhydride DCA and also furandicarboxylic acid with at least one at least bifunctional alcohol A, wherein
in a first step (1), the dicarboxylic acids DC or dicarboxylic anhydrides DCA are reacted with the at least bifunctional alcohols A with removal of the water of condensation at a temperature in the range from 100 to 300°C until at least 80% by weight of the water of condensation have been removed, based on the total amount of water which can be produced by condensation of the reactants, with the amount of the water of condensation being determined by means of the water removed by distillation from the reaction vessel, and with the dicarboxylic acid DC not being furandicarboxylic acid and with all dicarboxylic anhydrides DCA being selected from the group consisting of phthalic anhydride and
in a second step (2a), after the reaction mixture has reached a temperature in the range from 50 to 150°C, furandicarboxylic acid is added and subsequently in a next step (2b), the reaction mixture is reacted further at a temperature in the range from 150 to 300°C until an acid number of less than or equal to 1 mg KOH/g, preferably less than or equal to 0.8 mg KOH/g, has been reached,
with an additional organic solvent being used in none of the process steps.

2. The process for preparing polyester polyols according to claim 1, wherein the reaction in step (2b) is carried out to an acid number of less than or equal to 0.7 mg KOH/g, preferably less than or equal to 0.3 mg KOH/g.

3. The process for preparing polyester polyols according to claim 1 or 2, wherein the temperature in the first step (1) is in the range from 150 to 250°C, preferably in the range from 160 to 220°C, particularly preferably in the range from 170 to 190°C.

4. The process for preparing polyester polyols according to any of claims 1 to 3, wherein the temperature in step (2a) is in the range from 80 to 120°C, preferably in the range from 90 to 110°C.

5. The process for preparing polyester polyols according to any of claims 1 to 4, wherein the temperature in step (2b) is in the range from 160 to 280°C, preferably in the range from 170 to 240°C, particularly preferably in the range from 190 to 210°C.

6. The process for preparing polyester polyols according to any of claims 1 to 5, wherein at least one, preferably all, of the dicarboxylic acids DC are selected from the group consisting of aliphatic and aromatic dicarboxylic acids.

7. The process for preparing polyester polyols according to any of claims 1 to 6, wherein at least one, preferably all, of the dicarboxylic acids DC are selected from the group consisting of adipic acid.

8. The process for preparing polyester polyols according to any of claims 1 to 7, wherein no fatty acids are used.

9. The process for preparing polyester polyols according to any of claims 1 to 8, wherein no monocarboxylic acids are used.

10. The process for preparing polyester polyols according to any of claims 1 to 9, wherein at least one, preferably all, of the bifunctional alcohols A are selected from the group consisting of aliphatic and aromatic bifunctional alcohols.

11. The process for preparing polyester polyols according to any of claims 1 to 10, wherein at least one, preferably all, of the bifunctional alcohols A are selected from the group consisting of aliphatic bifunctional alcohols.

12. The process for preparing polyester polyols according to any of claims 1 to 11, wherein at least one, preferably all, of the bifunctional alcohols A are selected from the group consisting of diethylene glycol (DEGS), methyl ethyl glycol (MEG), 2-methyl-1,3-propanediol, 1,4-cyclohexanedimethanol, neopentyl glycol, trimethylolpropane, polyether polyols.

13. The process for preparing polyester polyols according to any of claims 1 to 12, wherein at least one, preferably all, of the bifunctional alcohols A are selected from the group consisting of DEG, MEG, polyether polyols.

14. The process for preparing polyester polyols according to any of claims 1 to 13, wherein at least one, preferably all, of the bifunctional alcohols A are selected from the group consisting of DEG.

15. The process for preparing polyester polyols according to any of claims 1 to 14, wherein the OH number of the product is in the range from 50 to 300 mg KOH/g, preferably from 150 to 300 mg KOH/g, particularly preferably from 160 to 300 mg KOH/g.

16. The process for preparing polyester polyols according to any of claims 1 to 15, wherein the product is liquid at 25°C, meaning a viscosity at 25°C of from 1 to 40 000 mPas.

17. The process for preparing polyester polyols according to any of claims 1 to 16, wherein the product has a viscosity at 75°C of less than or equal to 40 000 mPas, preferably less than or equal to 15 000 mPas, where the viscosity is determined in accordance with DIN EN ISO 3219 (October 1, 1994 edition) by means of a Rheotec RC 20 rotational viscometer using spindle CC 25 DIN (spindle diameter: 12.5 mm; internal diameter of measuring cylinder: 13.56 mm) at a shear rate of 50 1/s at 25°C.

18. The process for preparing polyester polyols according to any of claims 1 to 17, wherein the proportion of furandicarboxylic acid is from 5 to 45% by weight, preferably from 20 to 40% by weight, based on the total batch.

19. A polyester polyol preparable by the process of any of claims 1 to 18 and having an acid number of less than or equal to 1 mg KOH/g, preferably less than or equal to 0.8 mg KOH/g, and an OH number in the range from 50 to 300 mg KOH/g, preferably from 150 to 300 mg KOH/g, particularly preferably from 160 to 300 mg KOH/g.

20. The polyester polyol according to claim 19, wherein the polyester polyol is liquid at 25°C and/or the polyester polyol has a viscosity at 75°C of less than or equal to 40 000 mPas, preferably less than or equal to 15 000 mPas, where the viscosity is determined in accordance with DIN EN ISO 3219 (October 1, 1994 edition) by means of a Rheotec RC 20 rotational viscometer using spindle CC 25 DIN (spindle diameter: 12.5 mm; internal diameter of measuring cylinder: 13.56 mm) at a shear rate of 50 1/s at 25°C.

## Revendications

1. Procédé de fabrication de polyester-polyols par mise en réaction d'au moins un acide dicarboxylique DC ou d'au moins un anhydride d'acide dicarboxylique DCA, ainsi que d'acide furane-dicarboxylique avec au moins un alcool A au moins bifonctionnel, selon lequel
- lors d'une première étape (1), les acides dicarboxyliques DC ou les anhydrides d'acides dicarboxyliques DCA sont mis en réaction avec les alcools A au moins bifonctionnels avec élimination de l'eau de condensation à une température dans la plage allant de 100 à 300 °C, jusqu'à ce qu'au moins 80 % en poids de l'eau de condensation ait été éliminée, par rapport à la quantité totale de l'eau pouvant être formée par la condensation des réactifs, la quantité de l'eau de condensation étant déterminée à partir de l'eau éliminée du récipient de réaction par distillation, et l'acide dicarboxylique DC n'étant pas l'acide furane-dicarboxylique, et tous les anhydrides d'acides dicarboxyliques DCA étant choisis dans le groupe constitué par l'anhydride de l'acide phtalique, et
- lors d'une deuxième étape (2a), après que le mélange réactionnel ait atteint une température dans la plage allant de 50 à 150 °C, de l'acide furane-dicarboxylique est ajouté, puis
- lors d'une étape ultérieure (2b), le mélange réactionnel est davantage mis en réaction à une température dans la plage allant de 150 à 300 °C, jusqu'à ce qu'un indice d'acidité inférieur ou égal à 1 mg KOH/g, de préférence inférieur ou égal à 0,8 mg KOH/g, soit atteint,
un solvant organique supplémentaire n'étant utilisé dans aucune étape de procédé.

2. Procédé de fabrication de polyester-polyols selon la revendication 1, selon lequel la réaction à l'étape (2b) est réalisée jusqu'à un indice d'acidité inférieur ou égal à 0,7 mg KOH/g, de préférence inférieur ou égal à 0,3 mg KOH/g.

3. Procédé de fabrication de polyester-polyols selon la revendication 1 ou 2, selon lequel la température lors de la première étape (1) se situe dans la plage allant de 150 à 250 °C, de préférence dans la plage allant de 160 à 220 °C, de manière particulièrement préférée dans la plage allant de 170 à 190 °C.

4. Procédé de fabrication de polyester-polyols selon l'une quelconque des revendications 1 à 3, selon lequel la température à l'étape (2a) se situe dans la plage allant de 80 à 120 °C, de préférence dans la plage allant de 90 à 110 °C.

5. Procédé de fabrication de polyester-polyols selon l'une quelconque des revendications 1 à 4, selon lequel la température à l'étape (2b) se situe dans la plage allant de 160 à 280 °C, de préférence dans la plage allant de 170 à 240 °C, de manière particulièrement préférée dans la plage allant de 190 à 210 °C.

6. Procédé de fabrication de polyester-polyols selon l'une quelconque des revendications 1 à 5, selon lequel au moins un, de préférence tous les acides dicarboxyliques DC sont choisis dans le groupe constitué par les acides dicarboxyliques aliphatiques et aromatiques.

7. Procédé de fabrication de polyester-polyols selon l'une quelconque des revendications 1 à 6, selon lequel au moins un, de préférence tous les acides dicarboxyliques DC sont choisis dans le groupe constitué par l'acide adipique.

8. Procédé de fabrication de polyester-polyols selon l'une quelconque des revendications 1 à 7, selon lequel aucun acide gras n'est utilisé.

9. Procédé de fabrication de polyester-polyols selon l'une quelconque des revendications 1 à 8, selon lequel aucun acide monocarboxylique n'est utilisé.

10. Procédé de fabrication de polyester-polyols selon l'une quelconque des revendications 1 à 9, selon lequel au moins un, de préférence tous les alcools bifonctionnels A sont choisis dans le groupe constitué par les alcools bifonctionnels aliphatiques et aromatiques.

11. Procédé de fabrication de polyester-polyols selon l'une quelconque des revendications 1 à 10, selon lequel au moins un, de préférence tous les alcools bifonctionnels A sont choisis dans le groupe constitué par les alcools bifonctionnels aliphatiques.

12. Procédé de fabrication de polyester-polyols selon l'une quelconque des revendications 1 à 11, selon lequel au moins un, de préférence tous les alcools bifonctionnels A sont choisis dans le groupe constitué par le diéthylène glycol (DEG), le méthyléthylglycol (MEG), le 2-méthyl-1,3-propanediol, le 1,4-cyclohexane-diméthanol, le néopentylglycol, le triméthylolpropane, les polyéther-polyols.

13. Procédé de fabrication de polyester-polyols selon l'une quelconque des revendications 1 à 12, selon lequel au moins un, de préférence tous les alcools bifonctionnels A sont choisis dans le groupe constitué par le DEG, le MEG, les polyéther-polyols.

14. Procédé de fabrication de polyester-polyols selon l'une quelconque des revendications 1 à 13, selon lequel au moins un, de préférence tous les alcools bifonctionnels A sont choisis dans le groupe constitué par le DEG.

15. Procédé de fabrication de polyester-polyols selon l'une quelconque des revendications 1 à 14, selon lequel l'indice OH du produit est compris entre 50 et 300 mg KOH/g, de préférence entre 150 et 300 mg KOH/g, de manière particulièrement préférée de 160 à 300 mg KOH/g.

16. Procédé de fabrication de polyester-polyols selon l'une quelconque des revendications 1 à 15, selon lequel le produit est liquide à 25 °C, ce qui signifie une viscosité à 25 °C de 1 à 40 000 mPas.

17. Procédé de fabrication de polyester-polyols selon l'une quelconque des revendications 1 à 16, selon lequel le produit présente à 75 °C une viscosité inférieure ou égale à 40 000 mPas, de préférence inférieure ou égale à 15 000 mPas, la viscosité étant déterminée selon DIN EN ISO 3219 (édition 01.10.1994) avec un viscosimètre rotatif Rheotec RC 20 en utilisant le fuseau CC 25 DIN (diamètre du fuseau : 12,5 mm ; diamètre intérieur du cylindre de mesure : 13,56 mm) à un taux de cisaillement de 50 1/s à 25 °C.

18. Procédé de fabrication de polyester-polyols selon l'une quelconque des revendications 1 à 17, selon lequel la proportion d'acide furane-dicarboxylique est de 5 à 45 % en poids, de préférence de 20 à 40 % en poids, par rapport à la préparation totale.

19. Polyester-polyol, pouvant être fabriqué par le procédé selon l'une quelconque des revendications 1 à 18, présentant un indice d'acidité inférieur ou égal à 1 mg KOH/g, de préférence inférieur ou égal à 0,8 mg KOH/g, et un indice OH compris entre 50 et 300 mg KOH/g, de préférence compris entre 150 et 300 mg KOH/g, de manière particulièrement préférée de 160 à 300 mg KOH/g.

20. Polyester-polyol selon la revendication 19, le polyester-polyol étant liquide à 25 °C et/ou le polyester-polyol présentant à 75 °C une viscosité inférieure ou égale à 40 000 mPas, de préférence inférieure ou égale à 15 000 mPas, la viscosité étant déterminée selon DIN EN ISO 3219 (édition 01.10.1994) avec un viscosimètre rotatif Rheotec RC 20 en utilisant le fuseau CC 25 DIN (diamètre du fuseau : 12,5 mm ; diamètre intérieur du cylindre de mesure : 13,56 mm) à un taux de cisaillement de 50 1/s à 25 °C.
